**Europäisches Patentamt**

**(19)** **European Patent Office**

**Office européen des brevets**

(11) Publication number : **0 454 801 B1**

(12) # EUROPEAN PATENT SPECIFICATION

(45) Date of publication of patent specification :
**15.06.94 Bulletin 94/24**

(51) Int. Cl.⁵ : **C09K 5/04,** C10M 145/38,
// C10N40:30

(21) Application number : **90915610.1**

(22) Date of filing : **11.10.90**

(86) International application number :
**PCT/US90/05840**

(87) International publication number :
**WO 91/05831 02.05.91 Gazette 91/10**

(54) **FLUID COMPOSITIONS FOR REFRIGERATION COMPRESSORS AND PROCESS FOR PREPARING THE SAME.**

(30) Priority : **20.10.89 US 425621**

(43) Date of publication of application :
**06.11.91 Bulletin 91/45**

(45) Publication of the grant of the patent :
**15.06.94 Bulletin 94/24**

(84) Designated Contracting States :
**AT BE CH DE DK ES FR GB GR IT LI LU NL SE**

(56) References cited :
**EP-A- 0 379 175**
**EP-A- 0 386 851**
**US-A- 4 248 726**
**US-A- 4 267 064**
**US-A- 4 851 144**

(73) Proprietor : **THE DOW CHEMICAL COMPANY**
**2030 Dow Center,**
**Abbott Road**
**Midland, MI 48640 (US)**

(72) Inventor : **McGRAW, Philip, W.**
**57 Raintree Court**
**Lake Jackson, TX 77566 (US)**
Inventor : **EDENS, Michael, W.**
**405 Huckleberry**
**Lake Jackson, TX 77566 (US)**
Inventor : **WARD, Eldon, L.**
**1309 Clover**
**Angleton, TX 77515 (US)**

(74) Representative : **Huber, Bernhard, Dipl.-Chem.**
**et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

## Description

This invention relates to compositions of esterified polyglycols with hydrofluorocarbon and hydrochlorofluorocarbon refrigerants which are useful for lubricating compression refrigeration equipment such as heat pumps and air conditioning compressors.

Refrigerant R12 (dichlorodifluoromethane), is used in automotive air conditioners and many other types of refrigeration and air conditioning compressors. It is a chlorofluorocarbon that has been identified as depleting atmospheric ozone. The Montreal Protocol restricts the production of R12 beginning in 1992. Refrigerant R134a (1,1,1,2-tetrafluoroethane) has a vapor pressure very similar to R12 and has the advantage that it does not deplete atmospheric ozone. R134a can replace R12 in most refrigeration systems without major redesign of present equipment. It could be used in automotive air conditioners without any re-tooling by the automotive companies. The major problem of using R134a is that conventional lubricants used with R12, such as naphthenic mineral oils, are not soluble in R134a over the temperature range of -20°C to 100°C, the operating temperatures encountered in the different refrigeration applications. Some polyglycols are soluble in R134a at 25°C and below but phase separate as the temperature increases. The temperature of phase separation is called the upper solution critical temperature (USCT) and is reported in degrees Celsius. Phase separation of the lubricant from the refrigerant can cause poor lubricant return to the compressor. This results in poor lubrication of the compressor with the concurrent increased wear and decreased compressor life.

To provide effective lubrication to an air conditioning or refrigeration compressor, the lubricant must be soluble at all operating temperatures. Surprisingly, it has been found that the esters of certain polyglycols are more soluble in refrigerant 134a (R134a) than their polyglycol precursors. This discovery increases the range of lubricant solubility over that presented in the prior known art. These esterified polyglycol can be used to formulate lubricants for R134a and other hydrofluorocarbon refrigerants that will offer compressor manufacturers a broader temperature range in which to design compressors. The usefulness of this invention is that it will enable compressor manufacturers to substitute R134a and other hydrofluorocarbons or hydrochlorofluorocarbons for chlorofluorocarbons such as R12 in most compressors without mechanical modification to existing compressors and be able to operate over a broad temperature range.

The fundamentals of lubrication in air conditioners are set forth by H.H. Kruse et al. in "Fundamentals of Lubrication in Refrigeration Systems and Heat Pumps" pages 763-783; ASHRAE Transactions Vol 90 part 2B (1984).

Lubricants for various refrigeration compressors are known from US patent 4,248,726. This patent shows polyether polyols or polyglycols with functionalities of 1 to 6 are useful as refrigeration lubricants with various refrigerants such as, for example, R11, R12 and R22. The polyglycols can have free OH groups or can be ether- or ester-capped and can contain an acid scavenging additive package. These fluids must have a viscosity of 50 to 200 centistokes ($5 \times 10^{-5}$ to $20 \times 10^{-5}$ m²/s) at 98.8°C and a viscosity index of at least 150. The focus of this patent is an additive package that prevents the degradation of the high viscosity polyglycols in a compressor type refrigerator. The viscosities of these lubricants are higher than those of the lubricants of the present invention and these lubricants are not soluble in R134a at elevated temperatures.

U.S. Patent 4,267,064 shows essentially the same invention as the above 4,248,726 patent except that the '064 patent discloses and teaches the use of polyether polyols having viscosities of 25 to 50 centistokes ($25 \times 10^{-6}$ to $5 \times 10^{-5}$ m²/s) at 98.8°C. These lubricants have viscosities which are higher than those of the lubricants of the present invention and they are not soluble in R134a at elevated temperatures.

U.S. Patent 4,755,316 discloses compositions containing one or more polyether polyols for lubricating refrigeration compressors using R134a. The fluids of this patent are all hydroxyl terminated. Several esters were cited as being unsuitable as lubricants for R134a because they are insoluble at elevated temperatures (35°C or more).

U.S. Patent 4,851,144 discloses mixtures of polyether polyols such as a polypropylene glycol and certain polyol esters such as pentaerythritol tetraester which have high USCT's in R134a. As will be shown later, the esterified polyether polyols of the present invention surprisingly have USCT's higher than would be expected by mixing an amount of ester with the polyether polyol such that each fluid has an equal amount of ester functionality.

Lubricants for various refrigeration compressors are also known from Japanese patent J 57/051795. This patent suggests that a high molecular weight polypropylene glycol based on glycerine might be useful as a refrigeration lubricant. However, these polyglycols are insoluble in R134a at room temperature.

The invention comprises refrigerant/lubricant fluid compositions which have upper solution critical temperatures equal to or greater than 35°C comprising hydrofluorocarbon and hydrochlorofluorocarbon refrigerants with esterified polyether polyols.

In general, the compositions consist of (A) a refrigerant selected from hydrofluorocarbons and hydrochlorofluorocarbons, and (B) 1 to 75 percent by weight of a lubricant composition which has a viscosity of between 6 and 150 centistokes ($6 \times 10^{-6}$ and $15 \times 10^{-5}$ m²/s) at 38°C and which comprises esterified polyether polyols wherein greater than 30 percent, preferably greater than 60 percent and most preferably from 95 to 100 percent of the hydroxyl groups are esterified and wherein said esterified polyether polyols have the formula selected from

$$Z\text{-}[(CH_2\text{-}CH(R_1)\text{-}O\text{-})_n\text{-}(CH_2\text{-}CH(CH_3)\text{-}O\text{-})_m\text{-}R_2]_p \qquad (I)$$

wherein

Z is the residue of a compound having 1 to 8 active hydrogens and preferably 1 to 4 active hydrogens,

$R_1$ is hydrogen, ethyl, or mixtures thereof,

$R_2$ is an alkanoyl group of 2 to 6 carbon atoms or hydrogen,

n is 0 or a positive number,

m is a positive number,

n+m is a number having a value which will give an esterified polyether polyol with a number average molecular weight range of from 400 to 2500, and

p is an integer having a value equal to the number of active hydrogens of Z; or

$$Z\text{-}[(CH_2\text{-}CH(CH_3)\text{-}O\text{-})_n\text{-}R_1]_p \qquad (II)$$

wherein

Z is the residue of a compound having 1-8 active hydrogens,

$R_1$ is an alkanoyl group of 2 to 6 carbon atoms or hydrogen,

n is a number having a value which will give an esterified polyether polyol with a number average molecular weight range of from 400 to 2500, and

p is an integer having a value equal to the the number of active hydrogens of Z.

The present invention also relates to a process for preparing a fluid composition for use in compression refrigeration which have an upper solution critical temperature equal to or greater than 35°C which comprises blending

(A) a refrigerant selected from hydrofluorocarbons and hydrochlorofluorocarbons and

(B) 1 to 75 percent by weight of a lubricant composition which comprises esterified polyether polyols which have a viscosity of between 6 and 150 centistokes ($6 \times 10^{-6}$ and $15 \times 10^{-5}$ m²/s) at 38°C and wherein greater than 30 percent of the hydroxyl groups of said polyols are esterifed, wherein said esterified polyether polyol have the formula selected from Formula I or II identified previously.

A preferred composition of this invention is a fluid composition comprising 1,1,1,2-tetrafluoroethane (R134a) and from 1 to 75 percent by weight of a lubricant such as polypropylene glycol having a number average molecular weight of from 280 to 1500 with 95 percent or more of the free hydroxyl groups esterified with alkanoyl groups of 2 to 6 carbon atoms and particularly acetate groups or propionate groups.

Examples of the precursor polyether polyols or polyoxyalkylene polyols used in this invention are those derived from ethylene oxide, propylene oxide, 1,2-butylene oxide or 2,3-butylene oxide. The above oxides may be polymerized alone, i.e., homopolymerized or in combination. The combined oxides may also be combined in a random or block addition. Compounds of a hydrophobic nature are preferred, such as those derived from propylene oxide, butylene oxides or combinations thereof.

Examples of suitable polyoxyalkylene glycols are those derived from ethylene, propylene, and butylene oxides wherein the alkylene oxides are initiated from a compound having 1 to 8 active hydrogens in a known manner. These polyether polyols and their preparation are well known from the book "Polyurethanes" by Saunders and Frisch, Interscience Publishers (1962), pages 33-39.

Examples of suitable initiator compounds which are employed to prepare the above polyether polyols are compounds having 1-8 active hydrogens such as, for example, n-butanol, ethylene glycol, propylene glycol, water, glycerine, pentaerythritol, ethylene diamine, diethylene triamine, and sorbitol.

The foregoing precursor polyether polyols should have a number average molecular weight range of from 280 to 2500 and preferably in the range of from 400 to 1500.

The esterified polyglycols of this invention can be made by several different methods. The different methods of forming the esters of hydroxyl-containing compounds can be found in "Advanced Organic Chemistry " by Jerry March (McGraw-Hill) 1968, pages 319 and 320. One method is to react the hydroxyl-terminated polyglycol with an acid chloride such as trifluoracetyl chloride to form the trifluoracetate ester. Another method is to react the hydroxyl terminated polyglycols with an anhydride such as acetic anhydride to form the acetate ester terminal group.

EP 0 454 801 B1

Preparation of a partially esterified polyol

Polyglycol P2000 (100.9 g) and 30.4 g of acetic anhydride were added into a 250 ml, three neck, round bottom flask fitted with a heating mantle, stirrer, thermometer, condenser and nitrogen purge. The system was purged for five minutes with nitrogen and stirred before starting to heat the mixture. The mixture was then heated to 90°C and refluxed for four hours. The mixture was cooled and transferred to a 250 ml one neck round bottom flask and placed on a rotary evaporator. The product was subjected to 110°C and 30 in. Hg (762 mm Hg) vacuum for 1.5 hours to remove acetic acid and excess acetic anhydride. The product was cooled and transferred to a nitrogen padded bottle. The percent hydroxyl of the reaction product was analyzed to be 0.338 percent which is indicative of the fact that 76.6 percent of the hydroxyls had been capped.

The final lubricant compositions of this invention may contain effective amounts of ashless additives, such as antioxidants, corrosion inhibitors, metal deactivators, lubricity additives, extreme pressure additives and viscosity modifiers as may be required.

Examples of useful ashless antioxidants which can be used herein are phenyl naphthylamines, i.e., both alpha and beta-naphthyl amines; diphenyl amine; iminodibenzyl; p,p-dibutyl-diphenylamine; p,p′-dioctyldiphenylamine; and mixtures thereof. Other suitable antioxidants are hindered phenolics such as, for example, 2-t-butylphenol, 2,6-di-t-butylphenol and 4-methyl-2,6-di-t-butylphenol.

Examples of suitable ashless metal corrosion inhibitors which are commercially available include aliphatic amine salt of phosphoric acid monohexyl ester, diethylenetriamine dinonylnapthalene sulfonate, ethylene diamine dinonylnaphthalene sulfonate and N-methyl oleosarcosine.

Examples of suitable ashless cuprous metal deactivators are imidazole, benzimidazole, pyrazole, benzotriazole, tolutriazole, 2-methyl benzimidazole, 3,5-dimethyl pyrazole, and methylene bis-benzotriazole.

Examples of suitable viscosity modifiers are pentaerythritol tetrapelargonate and trimethyolpropane triheptonate.

An effective amount of the foregoing additives for use in an air conditioning compressor is generally in the range of from 0.1 to 5.0 percent by weight for the antioxidants, 0.1 to 5.0 percent by weight for the corrosion inhibitors, 0.001 to 0.5 percent by weight for the metal deactivators and 1 to 49 percent for the viscosity modifiers . The foregoing weight percentages are based on the total weight of the polyether polyols. It is to be understood that more or less of the additives may be used depending upon the circumstance for which the final composition is to be used.

Determination of the upper solution critical temperatures (USCT) for esterified polyglycols

The selected esterified polyether polyol or control was vacuum stripped. Glass ampules were washed with acetone and vacuum dried at 110°C. The empty ampule was weighed and the sample to be evaluated was syringed into the tube. The tube was re-weighed to determine the weight of lubricant. The tube was evacuated to remove the air and then immersed in a dry ice/methylene chloride slurry contained in a Dewar Flask. The R134a was transferred at a pressure of 8 psig (55 kPa gauge) into the tube to give the desired lubricant concentration. The filled ampule was then disconnected and allowed to equilibrate at 25°C. The ampules were placed in a controlled temperature bath and the temperature varied from -10°C to 95°C. Temperatures above 95°C were not investigated because of pressure limitations of the glass ampule apparatus. Systems with USCT's above this temperature limit are denoted as greater than 95°C.

Several examples (Ex.) of the present invention and comparative example (C.E.) with the refrigerant R134a are given in the following table.

4

R134a Upper Solution Critical Temperature Data

| | Polyol Functionality | Polyol Mol. Wt. | Ester | % Capping | Viscosity, cs ($m^2/s$) at 100°F (38°C) | Viscosity, cs ($m^2/s$) at 210°F (99°C) | % Lube in R134a | USCT °C |
|---|---|---|---|---|---|---|---|---|
| Ex. 1 | 1 | 910 | Acetate | 99 | 38 ($3.8 \times 10^{-5}$) | 7.9 ($7.9 \times 10^{-6}$) | 14.5 | 85 |
| C.E. 1 | 1 | 910 | 0 | 0 | 43 ($4.3 \times 10^{-5}$) | 8.3 ($8.3 \times 10^{-6}$) | 16.6 | 70 |
| Ex 2 | 2 | 1000 | Acetate | 90 | 56 ($5.6 \times 10^{-5}$) | 9.7 ($9.7 \times 10^{-6}$) | 15.7 | 90 |
| C.E. 2 | 2 | 1000 | 0 | 0 | 75 ($7.5 \times 10^{-5}$) | 10.8 ($1.08 \times 10^{-5}$) | 25.0 | 70 |
| Ex 3 | 2 | 1200 | Acetate | 90 | ND | ND | 13.8 | 82 |
| C.E. 3 | 2 | 1200 | 0 | 0 | 91 ($9.1 \times 10^{-5}$) | 13.5 ($1.35 \times 10^{-5}$) | 9.8 | 62 |
| Ex. 4 | 2 | 2000 | Acetate | 77 | 140 ($1.4 \times 10^{-4}$) | 22.1 ($2.21 \times 10^{-5}$) | 10.4 | 47 |
| Ex. 5 | 2 | 2000 | Propionate | 77 | 141 ($1.41 \times 10^{-4}$) | 22.9 ($2.29 \times 10^{-5}$) | 11.7 | 45 |
| C.E. 4 | 2 | 2000 | 0 | 0 | 160 ($1.6 \times 10^{-4}$) | 23 ($2.3 \times 10^{-5}$) | 12.4 | <25 |

R134a Upper Solution Critical Temperature Data (continued)

| | Polyol Functionality | Polyol Mol. Wt. | Ester | % Capping | Viscosity cs (m²/s) at 100°F (38°C) | Viscosity cs (m²/s) at 210°F (99°C) | % Lube in R134a | USCT °C |
|---|---|---|---|---|---|---|---|---|
| Ex. 6 | 3 | 700 | Acetate | 61 | 63 ($6.3 \times 10^{-5}$) | 8.1 ($8.1 \times 10^{-6}$) | 15.1 | >95 |
| C.E. 5 | 3 | 700 | 0 | 0 | 108 ($1.08 \times 10^{-4}$) | 10.5 ($1.05 \times 10^{-5}$) | 11.8 | 82 |
| C.E. 6 | 3 | 700 | Benzoate | 22 | ND | ND | 12.4 | <25 |
| Ex. 7 | 4 | 500(#) | Acetate | 64 | 48 ($4.8 \times 10^{-5}$) | 6.1 ($6.1 \times 10^{-6}$) | 17.7 | >95 |
| C.E. 7 | 4 | 500(#) | 0 | 0 | 119 ($1.19 \times 10^{-4}$) | 19.4 ($1.94 \times 10^{-5}$) | 10.8 | <25 |
| C.E. 8 | NA | NA | NA | NA | 96 ($9.6 \times 10^{-5}$) | 13.9 ($1.39 \times 10^{-5}$) | 13 | 35 |
| Ex. 8 | 2 | 425 | Acetate | 99 | 17.9 ($1.79 \times 10^{-5}$) | 3.9 ($3.9 \times 10^{-6}$) | 10.7 | >95 |
| Ex. 9 | 1 | 280 | Acetate | 100 | 6 ($6 \times 10^{-6}$) | Na | Na | >95 |

where # is (PEP 550) from the BASF Corporation

The polyol used in Example 1 is a n-butanol-initiated polyoxypropylene polyol of 910 molecular weight acetate ester with 99 percent of the hydroxyl groups capped with acetate groups and a 15 degree C improvement in the USCT over the polyglycol precursor of Comparative Example 1.

The polyol used in Comparative Example 1 is a n-butanol-initiated polyoxypropylene polyol of 910 molecular weight.

The polyol used in Example 2 is a propylene glycol-initiated polyoxypropylene polyglycol of 1000 molecular weight acetate ester with a 20 degree C improvement in the USCT over the polyglycol precursor of Comparative Example Control 2.

The polyol used in Comparative Example 2 is a propylene glycol-initiated polyoxypropylene polyglycol of 1000 molecular weight.

The polyol used in Example 3 is a propylene glycol-initiated polyoxypropylene polyglycol of 1200 molecular weight acetate ester with a 20 degree C improvement in the USCT over the polyglycol precursor of Comparative Example 3. The viscosities at 100°F (38°C) and 210°F (99°C) were not determined and this is shown in the table as (ND).

The polyol used in Comparative Example 3 is a propylene glycol-initiated polyoxypropylene polyglycol of 1200 molecular weight.

The polyol used in Example 4 is a propylene glycol-initiated polyoxypropylene polyglycol of 2000 molecular weight acetate ester with a greater than 20 degree C improvement in the USCT over the polyglycol precursor of Comparative Example 4.

The polyol used in Comparative Example 4 is a propylene glycol-initiated polyoxypropylene polyglycol of 2000 molecular weight.

The polyol used in Example 5 is a propylene glycol-initiated polyoxypropylene polyglycol of 2000 molecular weight propionate ester with a greater than 20 degree C improvement in the USCT over the polyglycol precursor of Comparative Example 4.

The polyol used in Example 6 is a glycerine-initiated polyoxypropylene polyglycol of 700 molecular weight acetate ester with greater than 13 degree C improvement in the USCT over the polyglycol precursor of Comparative Example 5.

The polyol used in Comparative Example 5 is a glycerine-initiated polyoxypropylene polyglycol of 700 molecular weight.

The polyol used in Comparative Example 6 is a glycerine-initiated polyoxypropylene polyglycol of 700 molecular weight benzoate ester. This Comparative Example shows that benzoate esters are not effective at increasing the USCT's of polyglycols. The viscosities at 100°F (38°C) and 210°F (99°C) were not determined (ND).

The polyol used in Example 7 is a pentaerythritol-initiated polyoxypropylene polyglycol of 500 molecular weight acetate ester with a greater than 70 degree C improvement in the USCT over the polyglycol precursor of Comparative Example 7.

The polyol used in Comparative Example 7 is a pentaerythritol-initiated polyoxypropylene polyglycol of 500 molecular weight.

The polyol used in Comparative Example 8 is a 70/30 blend of P-2000 polyglycol and Mobil P-51 ester. The esterified polyether polyols of the present invention are superior to blends of polyglycols and esters as disclosed in U.S. Patent 4,851,144 because the esterified polyether polyols have less percent ester moieties and surprisingly, have higher upper solution critical temperature values. For example, the polyol used in Comparative Example 8 has 9.5 percent ester groups and a USCT of 35°C whereas that used in Example 4 of the present invention has 3.3 percent ester groups and a USCT of 47°C and that used in Example 1 of the present invention has 4.6 percent ester groups and a USCT of 85°C.

The polyol used in Example 8 is a propylene glycol-initiated polyoxypropylene polyglycol of 425 molecular weight.

The polyol used in Example 9 is an n-butanol-initiated polyoxypropylene polyol of 280 molecular weight acetate ester with 100 percent of the hydroxyl groups capped with acetate groups.

The esterified polyglycols of the present invention also exhibit good solubility and would find utility with related hydrofluorocarbons and hydrochlorofluorocarbons such as 1,1,2,2-tetrafluoroethane, 1,1,1-trifluoroethane, 2,2-difluoroethane, trifluoromethane, methylene fluoride, methyl fluoride, difluorethylene, pentafluoroethane, chlorodifluoromethane, chlorofluoromethane, 2,2-dichloro-1,1,1-trifluoroethane, 1-chloro-1,2,2,2-tetrafluoroethane, 2-chloro-1,1,2,2-tetrafluoroethane, 1-chloro-2,2,2-trifluoroethane, 1,1-dichloro-1-fluoroethane and 2-chloro-2,2-difluoroethane.

## Claims

1. Fluid compositions for use in compression refrigeration which have an upper solution critical temperature equal to or greater than 35°C comprising
   (A) a refrigerant selected from hydrofluorocarbons and hydrochlorofluorocarbons and
   (B) 1 to 75 percent by weight of

EP 0 454 801 B1

a lubricant composition which comprises esterified polyether polyols which have a viscosity between 6 and 150 centistokes (6 x $10^{-6}$ and 15 x $10^{-5}$ m$^2$/s) at 38°C and wherein greater than 30 percent of the hydroxyl groups of said polyols are esterified, wherein said esterified polyether polyols have the formula selected from

$$Z\text{-}[(CH_2\text{-}CH(R_1)\text{-}O\text{-})_n\text{-}(CH_2\text{-}CH(CH_3)\text{-}O\text{-})_m\text{-}R_2]_p \qquad (I)$$

wherein

Z is the residue of a compound having 1 to 8 active hydrogens,

$R_1$ is hydrogen, ethyl, or mixtures thereof,

$R_2$ is an alkanoyl group of 2 to 6 carbon atoms or hydrogen,

n is 0 or a positive number,

m is a positive number,

n+m is a number having a value which will give an esterified polyether polyol with a number average molecular weight range of from 400 to 2500, and

p is an integer having a value equal to the number of active hydrogens of Z; or

$$Z\text{-}[(CH_2\text{-}CH(CH_3)\text{-}O\text{-})_n\text{-}R_1]_p \qquad (II)$$

wherein

Z is the residue of a compound having 1-8 active hydrogens,

$R_1$ is an alkanoyl group of 2 to 6 carbon atoms or hydrogen,

n is a number having a value which will give an esterified polyether polyol with a number average molecular weight range of from 400 to 2500, and

p is an integer having a value equal to the the number of active hydrogens of Z.

2. Fluid compositions as claimed in Claim 1 wherein greater than 60 percent of the hydroxyl groups are esterified.

3. Fluid compositions as claimed in Claim 1 wherein said hydrochlorofluorocarbons are selected from chlorodifluoromethane, chlorofluoromethane, 2,2-dichloro-1,1,1-trifluoroethane, 1-chloro-1,2,2,2-tetrafluoroethane, 2-chloro-1,1,2,2-tetrafluoroethane, 1-chloro-2,2,2-trifluoroethane, 1,1-dichloro-1-fluoroethane and 2-chloro-2,2-difluoroethane.

4. Fluid compositions as claimed in Claim 1 wherein said hydrofluorocarbons are selected from 1,1,1,2-tetrafluoroethane, 1,1,2,2-tetrafluoroethane, 1,1,1-trifluoroethane, 2,2-difluoroethane, trifluoromethane, methylene fluoride, methyl fluoride, difluorethylene and pentafluoroethane.

5. Fluid compositions as claimed in Claim 1 wherein Z is the residue of a compound having 1-4 active hydrogens.

6. A fluid composition for use in compression refrigeration comprising
(A) 1,1,1,2-tetrafluoroethane, and
(B) 1 to 75 percent by weight of
a polypropylene glycol having a number average molecular weight of from 400 to 1500 with 95 percent or more of the free hydroxyl groups esterified with alkanoyl groups of 2 to 6 carbon atoms.

7. A fluid composition as claimed in Claim 6 wherein said alkanoyl groups are selected from acetate and propionate groups.

8. A method of lubricating and/or operating compression refrigeration equipment which comprises using as the lubricant the composition of Claim 1 or 6.

9. A process for preparing a fluid composition for use in compression refrigeration which has an upper solution critical temperature equal to or greater than 35°C which comprises blending:
(A) a refrigerant selected from hydrofluorocarbons and hydrochlorofluorocarbons and
(B) 1 to 75 percent by weight of
a lubricant composition which comprises esterified polyether polyols which have a viscosity of between 6 and 150 centistokes (6 x $10^{-6}$ and 15 x $10^{-5}$ m$^2$/s) at 38°C and wherein greater than 30 percent of the hydroxyl groups of said polyols are esterified, wherein said esterified polyether polyols have the formula selected from

$$Z\text{-}[(CH_2\text{-}CH(R_1)\text{-}O\text{-})_n\text{-}(CH_2\text{-}CH(CH_3)\text{-}O\text{-})_m\text{-}R_2]_p \qquad (I)$$

wherein

Z is the residue of a compound having 1 to 8 active hydrogens,

$R_1$ is hydrogen, ethyl, or mixtures thereof,

$R_2$ is an alkanoyl group of 2 to 6 carbon atoms or hydrogen,

n is 0 or a positive number,

m is a positive number,

n+m is a number having a value which will give an esterified polyether polyol with a number average molecular weight range of from 400 to 2500, and

p is an integer having a value equal to the number of active hydrogens of Z; or

$$Z-[(-CH_2-CH(CH_3)-O-)_n-R_1]_p \qquad (II)$$

wherein

Z is the residue of a compound having 1 to 8 active hydrogens,

$R_1$ is an alkanoyl group of 2 to 6 carbon atoms or hydrogen,

n is a number having a value which will give an esterified polyether polyol with a number average molecular weight range of from 400 to 2500, and

p is an integer having a value equal to the the number of active hydrogens of Z.

## Patentansprüche

1. Fluidzusammensetzungen zur Verwendung in der Kompressionskühlung, die eine obere kritische Lösungstemperatur größer oder gleich 35°C aufweisen, umfassend

(A) ein Kühlmittel, ausgewählt aus Fluorkohlenwasserstoffen und Chlorfluorkohlenwasserstoffen und

(B) 1 bis 75 Gew.-% einer Schmiermittelzusammensetzung, umfassend veresterte Polyetherpolyole, die eine Viskosität zwischen 6 und 150 Centistoke (6 x $10^{-6}$ und 15 x $10^{-5}$ $m^2$/s) bei 38°C aufweisen und worin mehr als 30 % der Hydroxylgruppen der Polyole verestert sind, worin die veresterten Polyetherpolyole die Formel aufweisen, ausgewählt aus

$$Z-[(CH_2-CH(R_1)-O-)_n-(CH_2-CH(CH_3)-O-)_m-R_2]_p \qquad (I)$$

worin

Z der Rest einer Verbindung mit 1 bis 8 aktiven Wasserstoffatomen ist,

$R_1$ Wasserstoff, Ethyl oder Mischungen davon ist,

$R_2$ eine Alkanoylgruppe mit 2 bis 6 Kohlenstoffatomen oder Wasserstoff ist,

n 0 oder eine positive Zahl ist,

m eine positive Zahl ist,

n+m eine Zahl mit einem Wert ist, der ein verestertes Polyetherpolyol mit einem Molekulargewichtsbereich im Zahlenmittel von 400 bis 2500 ergibt, und

p eine ganze Zahl mit einem Wert gleich der Zahl von aktiven Wasserstoffatomen von Z ist, oder

$$Z-[(CH_2-CH(CH_3)-O-)_n-R_1]_p \qquad (II)$$

worin

Z der Rest einer Verbindung mit 1 bis 8 aktiven Wasserstoffatomen ist,

$R_1$ eine Alkanoylgruppe mit 2 bis 6 Kohlenstoffatomen oder Wasserstoff ist,

n eine Zahl mit einem Wert ist, der ein verestertes Polyetherpolyol mit einem Molekulargewichtsbereich im Zahlenmittel von 400 bis 2500 ergibt, und

p eine ganze Zahl mit einem Wert gleich der Zahl von aktiven Wasserstoffatomen von Z ist.

2. Fluidzusammensetzungen nach Anspruch 1, worin mehr als 60 % der Hydroxylgruppen verestert sind.

3. Fluidzusammensetzungen nach Anspruch 1, worin die Chlorfluorkohlenwasserstoffe aus Chlordifluormethan, Chlorfluormethan, 2,2-Dichlor-1,1,1-trifluorethan, 1-Chlor-1,2,2,2-tetrafluorethan, 2-Chlor-1,1,2,2-tetrafluorethan, 1-Chlor-2,2,2-trifluorethan, 1,1-Dichlor-1-fluorethan und 2-Chlor-2,2-difluorethan ausgewählt sind.

4. Fluidzusammensetzungen nach Anspruch 1, worin die Fluorkohlenwasserstoffe aus 1,1,1,2-Tetrafluorethan, 1,1,2,2-Tetrafluorethan, 1,1,1-Trifluorethan, 2,2-Difluorethan, Trifluormethan, Methylenfluorid, Methylfluorid, Difluorethylen und Pentafluorethan ausgewählt sind.

5. Fluidzusammensetzungen nach Anspruch 1, worin Z der Rest einer Verbindung mit 1 bis 4 aktiven Wasserstoffatomen ist.

**6.** Fluidzusammensetzung zur Verwendung in der Kompressionskühlung, umfassend

(A) 1,1,1,2-Tetrafluorethan, und

(B) 1 bis 75 Gew.-% eines Polypropylenglykols mit einem Molekulargewicht im Zahlenmittel von 400 bis 1500, wobei 95 % oder mehr der freien Hydroxylgruppen mit Alkanoylgruppen von 2 bis 6 Kohlenstoffatomen verestert sind.

**7.** Fluidzusammensetzung nach Anspruch 6, worin die Alkanoylgruppen aus Acetat- und Propionatgruppen ausgewählt sind.

**8.** Verfahren zum Schmieren und/oder Betreiben einer Kompressionskühleinrichtung, umfassend die Verwendung der Zusammensetzung von Anspruch 1 oder 6 als Schmiermittel.

**9.** Verfahren zum Herstellen einer Fluidzusammensetzung zur Verwendung in der Kompressionskühlung, die eine obere kritische Lösungstemperatur größer oder gleich 35°C aufweist, umfassend das Vermischen von:

(A) einem Kühlmittel, ausgewählt aus Fluorkohlenwasserstoffen und Chlorfluorkohlenwasserstoffen und

(B) 1 bis 75 Gew.-% einer Schmiermittelzusammensetzung, umfassend veresterte Polyetherpolyole, die eine Viskosität zwischen 6 und 150 Centistoke ($6 \times 10^{-6}$ und $15 \times 10^{-5}$ m²/s) bei 38°C aufweisen und worin mehr als 30 % der Hydroxylgruppen der Polyole verestert sind, worin die veresterten Polyetherpolyole die Formel aufweisen, ausgewählt aus

$$Z\text{-}[(CH_2\text{-}CH(R_1)\text{-}O\text{-})_n\text{-}(CH_2\text{-}CH(CH_3)\text{-}O\text{-})_m\text{-}R_2]_p \qquad (I)$$

worin

Z der Rest einer Verbindung mit 1 bis 8 aktiven Wasserstoffatomen ist,

$R_1$ Wasserstoff, Ethyl oder Mischungen davon ist,

$R_2$ eine Alkanoylgruppe mit 2 bis 6 Kohlenstoffatomen oder Wasserstoff ist,

n 0 oder eine positive Zahl ist,

m eine positive Zahl ist,

n+m eine Zahl mit einem Wert ist, der ein verestertes Polyetherpolyol mit einem Molekulargewichtsbereich im Zahlenmittel von 400 bis 2500 ergibt, und

p eine ganze Zahl mit einem Wert gleich der Zahl von aktiven Wasserstoffatomen von Z ist, oder

$$Z\text{-}[(CH_2\text{-}CH(CH_3)\text{-}O\text{-})_n\text{-}R_1]_p \qquad (II)$$

worin

Z der Rest einer Verbindung mit 1 bis 8 aktiven Wasserstoffatomen ist,

$R_1$ eine Alkanoylgruppe mit 2 bis 6 Kohlenstoffatomen oder Wasserstoff ist,

n eine Zahl mit einem Wert ist, der ein verestertes Polyetherpolyol mit einem Molekulargewichtsbereich im Zahlenmittel von 400 bis 2500 ergibt, und

p eine ganze Zahl mit einem Wert gleich der Zahl von aktiven Wasserstoffatomen von Z ist.

**Revendications**

**1.** Compositions fluides pour emploi en réfrigération par compression, présentant une température critique supérieure de de mise en solution égale ou supérieure à 35°C, comportant:

(A) un réfrigérant choisi parmi les hydrofluorocarbones et les hydrochlorofluorocarbones et

(B) 1 à 75 pour-cent en poids d'une composition lubrifiante qui comprend des polyétherpolyols estérifiés présentant une viscosité valant entre 6 et 150 centistokes ($5 \times 10^{-6}$ et $15 \times 10^{-5}$ m²/s) à 38°C, plus de 30 pour-cent des groupes hydroxyle desdits polyols étant estérifiés et lesdits polyétherpolyols estérifiés ayant une formule choisie parmi:

$$Z\text{-}[(CH_2\text{-}CH(R_1)\text{-}O\text{-})_n\text{-}(CH_2\text{-}CH(CH_3)\text{-}O\text{-})_m\text{-}R_2]_p \qquad (I)$$

où

Z est le résidu d'un composé présentant de 1 à 8 hydrogènes actifs,

$R_1$ est l'hydrogène, le groupe éthyle ou leurs mélanges,

$R_2$ est un groupe alcanoyle ayant de 2 à 6 atomes de carbone ou l'hydrogène,

n est 0 ou un nombre positif,

m est un nombre positif,

n+m est un nombre ayant une valeur telle qu'il donne un polyétherpolyol estérifié d'un poids moléculaire moyen valant entre 400 et 2500, et

p est un entier ayant une valeur égale au nombre d'hydrogènes actifs de Z; ou

$$Z-[(CH_2-CH(CH_3)-O-)_n-R_1]_p \qquad (II)$$

où

Z est le résidu d'un composé présentant de 1 à 8 hydrogènes actifs

$R_1$ est un groupe alcanoyle ayant de 2 à 6 atomes de carbone ou l'hydrogène,

n est un nombre ayant une valeur telle qu'il donne un polyétherpolyol estérifié d'un poids moléculaire moyen valant entre 400 et 2500, et

p est un entier ayant une valeur égale au nombre d'hydrogènes actifs de Z.

2. Compositions fluides selon la revendication 1 dans lesquelles plus de 60 pour-cent des groupes hydroxyle sont estérifiés.

3. Compositions fluides selon la revendication 1, dans lesquelles lesdits hydrochlorofluorocarbones sont choisis parmi le chlorodifluorométhane, le chlorofluorométhane, le 2,2-dichloro-1,1,1-trifluoréthane, le 1-chloro-1,2,2,2-tétrafluoroéthane, le 2-chloro-1,1,2,2-tétrafluoroéthane, le 1-chloro-2,2,2-trifluoroéthane, le 1,1-dichloro-1-fluoroéthane et le 2-chloro-2,2-difluoroéthane.

4. Compositions fluides selon la revendication 1, dans lesquelles lesdits hydrofluorocarbones sont choisis parmi le 1,1,2,2-tétrafluoroéthane, le 1,1,2,2-tétrafluoroéthane, le 1,1,1-trifluoroéthane, le 2,2-difluoroéthane, le trifluorométhane, le fluorure de méthylène, le fluorure de méthyle, le difluoroéthylène et le pentafluoroéthane.

5. Compositions fluides selon la revendication 1, dans lesquelles Z est le résidu d'un composé présentant 1-4 hydrogènes actifs.

6. Composition fluide pour emploi en réfrigération par compression comportant:
   (A) du 1,1,1,2-tétrafluoroéthane, et
   (B) de 1 à 75 pour-cent en poids d'un polypropylèneglycol présentant un poids moléculaire moyen de 400 à 1500 et 95% ou plus des groupes hydroxyle libres estérifiés avec des groupes alcanoyle ayant de 2 à 6 atomes de carbone.

7. Composition fluide selon la revendication 6, dans laquelle lesdits groupes alcanoyle sont choisis parmi les groupes acétate et propionate.

8. Procédé de lubrification et/ou de fonctionnement d'un équipement de réfrigération à compression comportant le fait d'utiliser comme lubrifiant la composition de la revendication 1 ou 6.

9. Procédé de préparation d'une composition fluide pour emploi en réfrigération par compression, présentant une température critique supérieure de mise en solution égale ou supérieure à 35°C et comprenant un mélange de
   (A) un réfrigérant choisi parmi les hydrofluorocarbones et les hydrochlorofluorocarbones et
   (B) de 1 à 75 pour-cent en poids d'une composition de lubrifiant qui comporte des polyétherpolyols estérifiés qui présentent une viscosité valant entre 6 et 150 centistokes ($6 \times 10^{-6}$ et $15 \times 10^{-5}$ m2/s) à 38°C et dans lesquels plus de 30 pour-cent des groupes hydroxyle desdits polyols sont estérifiés, ledit polyétherpolyol estérifié présentant une formule choisie parmi

$$Z-[(CH_2-CH(R_1)-O-)_n-(CH_2-CH(CH_3)-O-)_m-R_2]_p \qquad (I)$$

où

Z est le résidu d'un composé présentant de 1 à 8 hydrogènes actifs,

$R_1$ est l'hydrogène, le groupe éthyle ou leurs mélanges,

$R_2$ est un groupe alcanoyle ayant de 2 à 6 atomes de carbone ou l'hydrogène,

n est 0 ou un nombre positif,

m est un nombre positif,

n+m est un nombre ayant une valeur telle qu'il donne un polyétherpolyol estérifié d'un poids moléculaire moyen valant entre 400 et 2500, et

p est un entier ayant une valeur égale au nombre d'hydrogènes actifs de Z; ou

$$Z-[(CH_2-CH(CH_3)-O-)_n-R_1]_p \qquad (II)$$

où

Z est le résidu d'un composé présentant de 1 à 8 hydrogènes actifs

$R_1$ est un groupe alcanoyle ayant de 2 à 6 atomes de carbone ou l'hydrogène,

n est un nombre dont la valeur est telle qu'il donne un polyétherpolyol estérifié d'un poids moléculaire moyen valant entre 400 et 2500, et

p est un entier ayant une valeur égale au nombre d'hydrogènes actifs de Z.